# EUROPÄISCHE PATENTSCHRIFT

(11) **EP 1 770 403 B1**
(45) Veröffentlichungstag und Bekanntmachung des Hinweises auf die Patenterteilung: **07.04.2010**
(21) Anmeldenummer: 06020301.5
(22) Anmeldetag: 27.09.2006
(51) Int. Cl.: G01P 13/02, G01P 13/04, F24F 3/12

(54) **Windrichtungssensor einer Gebäudeentrauchungsanlage**
Wind direction sensor of a smoke extraction system of a building
Capteur de direction du vent d'une installation d'évacuation des fumées

(30) Priorität: 28.09.2005 DE 102005046577
(43) Veröffentlichungstag der Anmeldung: 04.04.2007
(73) Patentinhaber: Grasl, Andreas, 3452 Heiligeneich (AT)
(72) Erfinder: Grasl, Andreas, 3452 Heiligeneich (AT)
(74) Vertreter: Schubert, Siegmar

(56) Entgegenhaltungen:
- EP-A- 0 767 386
- BE-A7- 1 000 555
- US-A- 5 864 989

## Beschreibung

Die Erfindung betrifft einen Windrichtungssensor einer Gebäudeentrauchungsanlage nach dem Oberbegriff des Anspruchs 1.

Mit der Gebäudeentrauchungsanlage sollen Öffnungen in einer Gebäudewand nur auf einer windabgewandten Gebäudeseite mit Öffnungsgeräten selbsttätig i geöffnet werden, während Öffnungen in einer Gebäudewand auf einer windzugewandten Gebäudeseite geschlossen gehalten werden sollen, damit eine Entrauchung funktioniert. Zu einer solchen windrichtungsabhängigen Steuerung der Öffnungsgeräte werden nach dem aus der Praxis bekannten Stand der Technik Windrichtungssignale von einem Windrichtungssensor zu einer Steuereinheit übertragen, weiche die Windrichtungssignale auswertet und entsprechende Steuerbefehle an die Öffnungsgeräte abgibt. - Nach dem aus der Praxis bekannten Stand der Technik werden zur Erzeugung der Windrichtungssignale Windrichtungssensoren einer Bauweise verwendet, welche die aktuelle Windrichtung bezogen auf die vier Haupthimmelsrichtungen erfaßt, um entsprechende elektrische Signale über ein zumindest fünfadriges Kabel an die Steuereinheit zu übertragen.

Um in derartigen Rauch- und Wärmeabzugsanlagen eine zuverlässige Funktion, zu gewährleisten, werden üblicherweise die elektrischen Leitungen auf Erdschfuß, Drahtbruch und Kurzschluß überwacht. Diese Überwachung ist bei einem vieladrigen Kabel technisch aufwendig und verursacht entsprechend hohe Kosten. - Aber auch die Verarbeitung bzw. Auswertung solcher Windrichtungssignale bzw. Daten, die sich auf die vier Haupthimmelsrichtungen beziehen, erfordert eine technisch aufwendige Steuereinheit, insbesondere Logikeinheit.

Bekannt ist eine Windrichtungsanzeigeanordnung zur Anzeige der Windrichtung innerhalb eines Gebäudes mittels einer stationären Windrose, an der einzelnen diskreten Windrichtungen Leuchtdioden zugeordnet sind, die abhängig von der Windrichtung eingeschaltet werden (BE 1000555 A7). Hierzu weist ein außen an dem Gebäude angeordneter Windsensor eine an Platten drehbar gelagerte Nockenscheibe auf. In dem Drehbereich der Nockenscheibe sind an einer der Platten mehrere Schalter mit je einem nockengesteuerten Betätigungselement in einer den Leuchtdioden an der Windrose zugeordneten Anordnung ortsfest angebracht. Von jedem der Schalter führt eine Leitung zu einer der Leuchtdioden, beispielsweise sind insgesamt acht Leitungen vorgesehen. Bei Verwendung eines solchen Windrichtungssensors in einer Steuereinheit einer Gebäudeentrauchungsanlage wäre also mit den Nachteilen, wie oben zu dem in der Praxis verwendeten fünfadrigen Kabel erwähnt, in noch höherem Maß zu rechnen.

Generell ist es bekannt, in einem Gebäude Belüftungsfenster windrichtungsgesteuert zu öffnen oder zu schließen, ausgehend von dem Prinzip, dass ein Belüftungsfenster zum Lüften geöffnet wird, wenn an dem Belüftungsfenster in dem Gebäude ein höherer Druck herrscht als draußen, und bei umgekehrter Druckdifferenz das Belüftungsfenster zu schließen, um zu verhindern, dass starker Wind in das Gebäude bläst (US 5 864 989 A).

Zum Stand der Technik gehört ferner ein Lüftungssystem, in dem wenigstens eine Lüftungsvorrichtung einen richtungsempfindlichen Luftströmungsgeschwindigkeitssensor zur Generierung eines Signals aufweist, das die Geschwindigkeit und Richtung der Luftströmung anzeigt (EP 0 767 386 A). Abhängig von diesem Signal wird ein Durchlassventil der Lüftungsvorrichtung geöffnet oder geschlossen, um die Luftströmung in einem Gebäuderaum auf einem vorgegebenen Durchsatzwert zu halten, unabhängig von der Luftströmungsrichtung im Bereich des Sensors. Der zum Beispiel auf einer Leiterplatte aufgebaute Sensor umfasst ein erstes künstlich erwärmtes Sensorelement und weitere temperaturempfindliche Sensorelemente, die grundsätzlich identisch sein können. Allerdings sind zur Erfassung von zwei Luftströmungsrichtungen außer dem mit elektrischer Energie erwärmten Sensorelement zwei temperaturempfindliche Sensorelemente in einer Brückenschaltung oder mit einem Mikroprozessor gekoppelt vorgesehen.

Um die Nachteile bekannter Windrichtungssensoren zu vermeiden, liegt der vorliegenden Erfindung die Aufgabe zugrunde, einen Windrichtungssensor einer Gebäudeentrauchungsanlage zu schaffen, der zuverlässig und mit unkomplizierten Mitteln Windrichtungssignale und nicht redundante Daten der gebäudebezogenen Windrichtung generiert. Der Windrichtungssensor soll damit eine technisch wenig aufwendige Übertragung der Windrichtungssignale über ein Kabel bzw. Leitungen sowie Auswertung der Windrichtungssignale bzw. -Daten ermöglichen.

Zur Lösung dieser Aufgabe weist der Windrichtungssensor der eingangs genannten Gattung die in Anspruch 1 angegebenen Merkmale auf. Zu den Merkmalen gehört nach dem kennzeichnenden Teil des Anspruchs 1, daß der Windrichtungssensor eine auf einer Grundplatte um eine vertikale Drehachse drehbar gelagerte Nockenscheibe mit einer sich über ca. 180° erstreckenden Nocke sowie einen auf der Grundplatte gegenüber der Nockenscheibe ortsfest angebrachten Schalter mit einem nockengesteuerten Betätigungselement umfaßt, und daß die Grundplatte mit Ausrichtmitteln versehen ist, mit denen sie zu der Gebäudewand mit den Öffnungen ausgerichtet montierbar ist. Wie an sich bekannt steht ein Windflügel mit der Nockenscheibe in fester Verbindung.

Dieser Windrichtungssensor zeichnet sich durch einen unkomplizierten, robusten Aufbau aus, der einen zuverlässigen Betrieb erwarten läßt. Nach einfacher Montage des Windrichtungssensors werden von diesem Windrichtungssignale erzeugt, die nur das Minimum der tatsächlich benötigten Information beinhalten, nämlich, ob eine Gebäudewand mit zu öffnenden Öffnungen aktuell windabgewandt ist oder nicht. Die Windrichtungssignale eines einzigen Windrichtungssensors können zur Steuerung der Öffnungsgeräte mehrerer paralleler Gebäudewände, auch einander gegen-überliegender Gebäudewände, verwendet werden, indern die Windrichtungssignale bzw. Daten bezogen auf die Gebäudeseiten ausgewertet werden.

Ein wesentliches Element des Windrichtungssensors ist die Nockenscheibe mit der sich über ca. 180° erstreckenden Nocke, die also einen größeren Radius als die restlichen 180° einer sich über 360° erstreckenden Nockenscheibe aufweist, die somit aus zwei Bereichen mit jeweils konstantem Radius bestehend definiert ist. Übergangsstellen zwischen diesen beiden Bereichen der Nockenscheibe können abgeschrägt bzw. abgerundet sein, um ein störungsfreies, reibungsarmes Gleiten des nockengesteuerten Betätigungselements des Schalters zu ermöglichen, Die Übergangsstellen können sich über wenige Winkelgrad erstrecken und eine entsprechende Abweichung von den 180° bedeuten, über die sich die Nocke erstrecken soll.

Zur Bildung signifikanter Windrichtungssignale, die einfach auszuwerten sind, um anzugeben, ob eine Gebäudeseite windabgewandt ist oder nicht, ist der Windrichtungssensor zu dieser Gebäudeseite bei der Montage des Windrichtungssensors einfach auszurichten. Hierzu umfaßt die Grundplatte Ausrichtmittel, insbesondere gemäß Anspruch 2 eine horizontale Ausrichtlinie, mit der die Grundplatte parallel zu der Gebäudewand ausgerichtet montiert werden kann. Die Ausrichtlinie kann in vielfältiger Weise einfach realisiert sein, beispielsweise durch eine gerade Kante der Grundplatte des Windrichtungssensors oder aber gemäß Anspruch 4 zwei im Abstand zueinander angeordnete Markierungen auf der Grundplatte, die zur Deckung mit der Kante der überwachten Gebäudewand gebracht werden können. Zwischen beiden Markierungen befindet sich die in diesem Fall virtuelle Ausrichtlinie.

Die Montage nach Maßgabe der Ausrichtlinie der Grundplatte ist unkritisch, solange die Grundplatte parallel zu der überwachten Gebäudeseite ausgerichtet ist, jedoch kommt es auf einen seitlichen Versatz nicht an.

Die Anordnung der Elemente des Windrichtungssensors kann unter Bezugnahme auf die Ausrichtlinie nach Anspruch 3 definiert werden. Dabei können die Nocke und der von ihr über das nockengesteuerte Betätigungselement gesteuerte Schalter in ihrer Gesamtheit beliebig gedreht zu der Ausrichtlinie montiert sein, wenn die Nocke symmetrisch zu dem Betätigungselement angeordnet ist bei einer Drehstellung des Windflügels rechtwinklig quer zu der horizontalen Ausrichtlinie.

Zur Auswertung der mit dem Windrichtungssensor erzeugten Windrichtungssignale kann eine einfache Logikeinheit in der Steuereinheit dienen, die mit dem Schalter des Windrichtungssensors in Verbindung steht und die berücksichtigt, an weicher Stelle des Gebäudes sich eine überwachte Gebäudeseite befindet, die je nach ihrer Lage für einen herrschenden Wind eine windzugewandte Seite oder eine windabgewandte Seite sein kann.

Dementsprechend kann eine bevorzugte Logikeinheit in der Steuereinheit, die mit dem nockengesteuerten Schalter in Verbindung steht, nach Anspruch 6 die Windrichtungssignale eines einzigen Windrichtungssensors unkompliziert für mehrere unterschiedliche Gebäudeseiten, die zueinander parallel verlaufen, auswerten, so daß bei betätigtem Schalter des Windrichtungssensors die Öffnungsgeräte an einer ersten Gebäudeseite öffnen, die windabgewandt ist, und bei unbetätigtem Schalter Öffnungsgeräte an einer zweiten Gebäudeseite, die der ersten Gebäudeseite gegenüberliegt, öffnen, wenn jene windabgewandt ist.

Gemäß Anspruch 5 umfaßt der nockenbetätigte Schalter des Windrichtungssensors nur ein schaltbares Kontaktpaar, das geschlossen oder geöffnet ist, je nachdem, ob das nockengesteuerte Betätigungselement des Schalters an der sich über 180° erstreckenden Nocke anliegt oder nicht. Dementsprechend beinhalten die Windrichtungssignale nur den Schaltzustand des einzigen Kontaktpaars. Sie können einfach über ein zweiadriges Kabel zu der Steuereinheit übertragen werden.

Besonders vorteilhaft, da mit einfachen Mitteln zuverlässig zu überwachen, ist das zweiadrige Kabel gemäß Anspruch 7 mit einer Überwachungseinrichtung auf Erdschluß, Drahtbruch und Kurzschluß verbunden.

Die Erfindung wird im folgenden anhand einer Zeichnung mit drei Figuren erläutert. Es zeigt:
- Figur 1: eine Seitenansicht eines Gebäudes mit Brandschutzeinrichtung und geöffneter Öffnung auf einer windabgewandten Seite,
- Figur 2: das Gebäude gemäß Figur 1 in einer Draufsicht mit schematisch dargestelltem Windrichtungssensor, jedoch ohne Öffnung in der Gebäudewand, und
- Figur 3: eine detailliertere Draufsicht auf den Windrichtungssensor gemäß Figur 2.

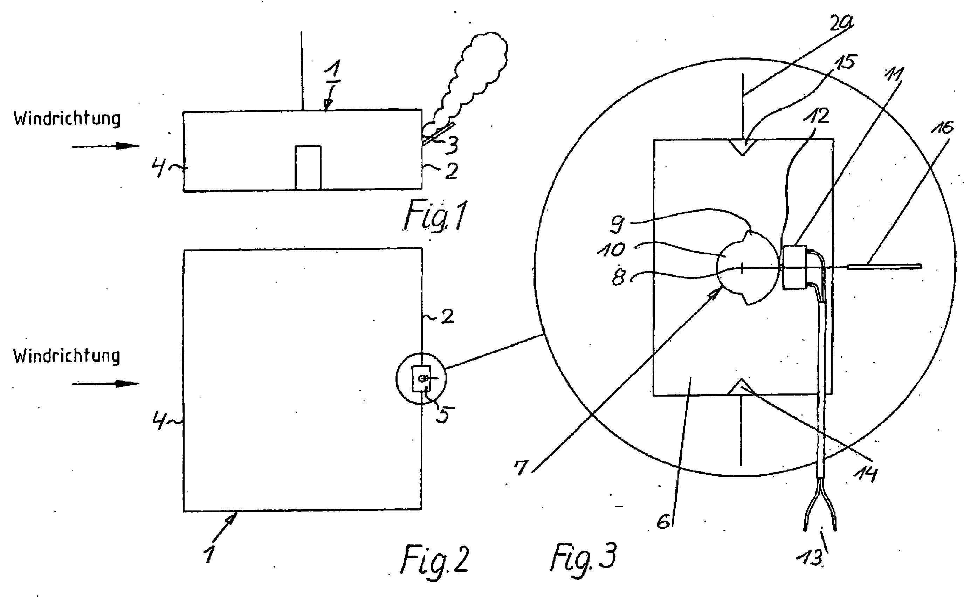

In Figur 1 ist mit 1 ein Gebäude bezeichnet, auf dessen windabgewandter Seite 2 mit einem Öffnungsgerät 3 eine Öffnung in einer Gebäudewand geöffnet ist. Die Windrichtung ist mit einem Pfeil angedeutet.

Um nur Öffnungsgeräte, z.B. das Öffnungsgerät 3, auf der windabgewandten Gebäudeseite 2 zu öffnen, nicht aber Öffnungsgeräte auf der windzugewandten Gebäudeseite 4, die eine zur Gebäudeseite 2 gegenüberliegende Gebäudeseite ist, befindet sich auf dem Gebäude ein allgemein mit 5 bezeichneter Windrichtungssensor, siehe Figur 2.

Wie im einzelnen aus Figur 3 ersichtlich, umfaßt der Windrichtungssensor eine Grundplatte 6, auf der eine Nockenscheibe 7 drehbar gelagert ist. In montiertem Zustand des Windrichtungssensors ist die ideelle Drehachse 8 der Nockenscheibe 7 vertikal ausgerichtet. Die Nockenscheibe 7 weist eine sich über 180° erstreckende Nocke 9 auf, deren Radius größer als der nockenfreie Bereich 10 der Nockenscheibe ist, der sich ebenfalls über ca. 180° erstreckt. Nicht bezeichnete kurze Übergangsbereiche zwischen der Nocke 9 und dem nockenfreien Bereich 10 sind abgeschrägt.

Auf der Grundplatte 6 ist weiterhin ein Schalter 11 mit einem nockengesteuerten Betätigungselement 12 so montiert, daß das Betätigungselement 12 durch die Nocke 9 gesteuert, d.h. eingedrückt wird, wogegen das Betätigungselement 12 in dem nockenfreien Bereich 10 nicht betätigt ist.

In dem Schalter befindet sich ein durch das Betätigungselement 12 betätigtes Kontaktpaar, welches über ein zweiadriges Kabel 13 an eine in der Zeichnung nicht dargestellte Steuereinheit mit einer Logikeinheit angeschlossen wird, die Steuerbefehle an die Öffnungsgeräte abgeben kann.

Zur Ausrichtung des Windrichtungssensors 5 gegenüber einer Gebäudeseite, hier der windabgewandten Gebäudeseite 2, die in Figur 3 mit der Gebäudekante 2a angedeutet ist, weist die Grundplatte 6 an einander gegenüber liegenden Seiten zwei Markierungen 14, 15 auf, zwischen denen sich eine virtuelle Ausrichtlinie erstreckend gedacht werden kann. Bei der Montage des Windrichtungssensors wird die Ausrichtlinie parallel zu der Gebäudekante 2a ausgerichtet. In Figur 3 ist die Gebäudekante 2a zur Deckung mit den Markierungen 14, 15 gebracht.

Zur Abgabe geeigneter Windrichtungssignale von dem wie beschrieben ausgerichtet zu montierenden Windrichtungssensor 5 wird der Windflügel 16, wie in Figur 3 angedeutet, so mit der Nockenscheibe 7 in Verbindung gebracht, daß sich die Nocke 9 hälftig auf beiden Seiten des nockengesteuerten Betätigungselements 12 des Schalters 11 befindet, wenn die Richtung des Windflügels 16 rechtwinklig quer zu der horizontalen Ausrichtlinie verläuft. Dabei kann eine i-deelie horizontale Verbindungslinie zwischen der vertikalen Drehachse 8 und dem nockengesteuerten Betätigungselement 12 wie in Figur 3 dargestellt rechtwinklig zu der Ausrichtlinie orientiert sein, sie kann aber auch andere Winkelstellungen zu der Ausrichtlinie einnehmen, wenn die Nocke 9 so montiert ist, daß sie quasi durch die Verbindungslinie hälftig geteilt ist.

Nach Anschluß des Windrichtungssensors an die nicht dargestellte Steuereinheit mit Logikeinheit kann mit der Logikeinheit eindeutig ermittelt werden, ob entsprechend dem Schaltzustand des Schalters 11 die Gebäudeseite 2 windabgewandt ist und dementsprechend die Seite 4 des Gebäudes windzugewandt ist, weit der Schalter durch die Nocke 9 betätigt ist, oder aber umgekehrt die Gebäudeseite 2 windzugewandt ist und die Gebäudeseite 4 windabgewandt ist, wenn der Windflügel gegenüber der Darstellung in Figur 3 so weit gedreht ist, daß sich das Betätigungselement 12 des Schalters 11 in dem nockenfreien Bereich 10 der Nockenscheibe 7 befindet.

Außerdem kann durch eine an das Kabel 13 angeschlossene Überwachungseinrichtung fortlaufend überwacht werden, ob für jede der beiden Adern des Kabels Erdschluß oder Drahtbruch oder für beide Adern Kurzschluß vorliegt, so daß ein Warnsignal abgegeben wird, weil keine signifikanten Windrichtungssignale zu der Steuereinheit übertragen und in dieser ausgewertet werden können.

### Bezugszahlenliste

- 1: Gebäude
- 2: windabgewandte Gebäudeseite
- 2a: Gebäudekante
- 3: Öffnungsgerät
- 4: windzugewandte Gebäudeseite
- 5: Windrichtungssensor
- 6: Grundplatte
- 7: Nockenscheibe
- 8: Drehachse
- 9: Nocke
- 10: nockenfreier Bereich
- 11: Schalter
- 12: Betätigungselement
- 13: zweiadriges Kabel
- 14: Markierung
- 15: Markierung
- 16: Windflügel

## Patentansprüche

1. Windrichtungssensor, der sich für die Verwendung in einer Steuereinheit von Öffnungsgeräten (3) einer Gebäudeentrauchungsanlage eignet, mit der Öffnungen in einer Gebäudewand auf einer windabgewandten Gebäudeseite (2) in Abhängigkeit von elektrischen, von dem Windrichtungssensor (5) generierten Windrichtungssignalen, die zu der Steuereinheit der Öffnungsgeräte (3) übertragen werden, geöffnet werden,
wobei der Windrichtungssensor (5) eine auf einer Grundplatte (6) um eine vertikale Drehachse (8) drehbar gelagerte Nockenscheibe (7) sowie mindestens einen auf der Grundplatte (6) gegenüber der Nockenscheibe (7) ortsfest angebrachten Schalter (11) mit einem nockengesteuerten Betätigungselement (12) umfasst und
wobei ein Windflügel (16) mit der Nockenscheibe (7) in fester Verbindung steht,
**dadurch gekennzeichnet,**
**dass** die Nockenscheibe (7) eine sich über 180° erstreckende Nocke (9) aufweist,
**dass** ein Schalter (11) auf der Grundplatte (6) gegenüber der Nockenscheibe (7) ortsfest angebracht ist und
**dass** die Grundplatte (6) mit Ausrichtmitteln versehen ist, mit denen sie zu der Gebäudewand ausgerichtet montierbar ist.

2. Windrichtungssensor nach Anspruch 1,
**dadurch gekennzeichnet,**
**daß** die Ausrichtmittel eine horizontale Ausrichtlinie umfassen, mit der die Grundplatte (6) parallel zu der Gebäudewand ausgerichtet montierbar ist.

3. Windrichtungssensor nach den Ansprüchen 1 und 2,
**dadurch gekennzeichnet,**
**daß** die Nockenscheibe (7), der Schalter (11) mit dem nockengesteuerten Betätigungselement (12) und der Windflügel (16) derart angeordnet sind, daß die Nocke (9) symmetrisch zu dem Betätigungselement (12) des Schalters (11) ist, wenn die Windflügelrichtung rechtwinklig quer zu der horizontalen Ausrichtlinie steht.

4. Windrichtungssensor nach Anspruch 2 oder 3,
**dadurch gekennzeichnet,**
**daß** die Ausrichtlinie durch zwei Markierungen (14, 15) auf der Grundplatte (6) markiert ist.

5. Windrichtungssensor nach einem der Ansprüche 1-4,
**dadurch gekennzeichnet,**
**daß** der Schalter (11) ein Kontaktpaar umfaßt, das über ein zweiadriges Kabel (13) an der Steuereinheit anschließbar ist.

6. Windrichtungssensor nach einem der Ansprüche 1-5,
**gekennzeichnet durch**
eine derartige Logikeinheit in der Steuereinheit, die mit dem Schalter (11) in Verbindung steht, daß bei betätigtem Schalter (11) die Öffnungsgeräte (3) an einer ersten Gebäudeseite (2) öffnen, die windabgewandt ist, und bei unbetätigtem Schalter Öffnungsgeräte an einer zweiten Gebäudeseite (4) öffnen, die der ersten Gebäudeseite gegenüberliegt.

7. Windrichtungssensor nach einem der Ansprüche 4-6,
**dadurch gekennzeichnet,**
**daß** das Kabel (13) mit einer Überwachungseinrichtung auf Erdschluß, Drahtbruch und Kurzschluß verbunden ist.

## Claims

1. Wind direction sensor suitable for use in a control unit of opening devices (3) of a smoke extraction system by means of which openings in the wall of a building on a leeward side of the building (2) are opened depending on electrical wind direction signals generated by said wind direction sensor which are transferred to said control unit of said opening devices (3),
wherein said wind direction sensor (5) comprises one cam disk (7) rotatable about a vertical axis of rotation (8) on a base plate (6) and at least one switch (11) including a cam-controlled actuation element (12) stationarily provided on said base plate (6) and facing said cam disc (7) and
wherein an air wing (16) is solidly connected with said cam disc (7),
**characterized in**
**that** said cam disc (7) includes a cam (9) extending about 180°, that one switch (11) is stationarily provided on said base plate (6) facing said cam disc (7) and
**that** said base plate (6) is provided with aligning means by which it can be mounted in alignment with the wall of the building.

2. Wind direction sensor according to claim 1,
**characterized in**
**that** said alignment means comprise a horizontal alignment line by which said base plate (6) can be mounted in parallel relative to the wall of the building.

3. Wind direction sensor according to claim 1,
**characterized in**
**that** said cam disc (7), said switch (11) including said cam-controlled actuation element (12), and said air wing (16) are so disposed that said cam (9) is symmetrical relative to said actuation element (12) of said switch (11) if the air wind direction is right-angled relative to said horizontal alignment line.

4. Wind direction sensor according to claim 2 or 3,
**characterized in**
**that** said alignment line is indicated by two marks (14, 15) on said base plate (6).

5. Wind direction sensor according to one of claims 1 through 4,
**characterized in**
**that** said switch (11) comprises a contact pair which can be connected to said control unit via a two-wire cable (13).

6. Wind direction sensor according to one of claims 1 through 5,
**characterized by**
such a logic unit in said control unit which is connected with said switch (11) that, if said switch (11) is actuated, said opening devices (3) open on a first side of the building (2) which is leeward and, if said switch is not actuated, opening devices open on a second side of the building (4) which is opposite to said first side of the building.

7. Wind direction sensor according to one of claims 4 through 6,
**characterized in**
**that** said cable (13) is connected with a monitoring device observing ground leak, wire breakage and short circuit.

## Revendications

1. Capteur de direction de vent apte à être utilisé dans une unité de commande de dispositifs d'ouverture (3) d'une installation d'évacuation des fumées d'un bâtiment, au moyen de laquelle des ouvertures dans un mur de bâtiment sur un côté (2) du bâtiment opposé au vent sont ouvertes en fonction de signaux électriques de direction de vent, générés par le capteur de direction de vent (5), qui sont transmis à l'unité de commande des dispositifs d'ouverture (3),
le capteur de direction de vent (5) comprenant un disque à cames (7) monté sur une plaque de base (6) de façon à pouvoir pivoter autour d'un axe de rotation vertical (8), ainsi qu'au moins un interrupteur (11) placé fixement sur la plaque de base (6) en regard du disque à cames (7) et doté d'un élément d'actionnement (12) commandé par came, et
une ailette à vent (16) étant reliée fixement au disque à cames (7), **caractérisé**
**en ce que** le disque à cames (7) présente une came (9) s'étendant sur 180°, en ce qu'un interrupteur (11) est placé fixement sur la plaque de base (6) en regard du disque à cames (7), et
**en ce que** la plaque de base (6) est pourvue de moyens d'alignement qui permettent le montage de celle-ci en alignement avec le mur du bâtiment.

2. Capteur de direction de vent selon la revendication 1,
**caractérisé en ce que**
les moyens d'alignement comprennent une ligne d'alignement horizontale au moyen de laquelle la plaque de base (6) peut être montée alignée parallèlement au mur du bâtiment.

3. Capteur de direction de vent selon les revendications 1 et 2,
**caractérisé en ce que**
le disque à cames (7), l'interrupteur (11) avec l'élément d'actionnement (12) commandé par came et l'ailette à vent (16) sont agencés de façon telle que la came (9) est symétrique à l'élément d'actionnement (12) de l'interrupteur (11) lorsque la direction de l'ailette à vent est orthogonalement transversale à la ligne d'alignement horizontale.

4. Capteur de direction de vent selon la revendication 2 ou 3,
**caractérisé en ce que**
la ligne d'alignement est identifiée par deux marquages (14, 15) sur la plaque de base (6).

5. Capteur de direction de vent selon l'une des revendications 1 à 4,
**caractérisé en ce que**
l'interrupteur (11) comprend une paire de contacts qui peut être raccordée à l'unité de commande via un câble à deux conducteurs (13).

6. Capteur de direction de vent selon l'une des revendications 1 à 5,
**caractérisé par**
une unité logique dans l'unité de commande, reliée à l'interrupteur (11), telle que lorsque l'interrupteur (11) est actionné, les dispositifs d'ouverture (3) permettent l'ouverture sur un premier côté (2) du bâtiment qui est opposé au vent, et telle que lorsque l'interrupteur n'est pas actionné, les dispositifs d'ouverture permettent l'ouverture sur un second côté (4) du bâtiment, qui fait face au premier côté du bâtiment.

7. Capteur de direction de vent selon l'une des revendications 4 à 6,
**caractérisé en ce que**
le câble (13) est relié à un dispositif de surveillance pour détection d'un défaut à la terre, d'une rupture de fil et d'un court-circuit.
